# EUROPÄISCHE PATENTSCHRIFT

(11) **EP 4 430 373 B1**
(45) Veröffentlichungstag und Bekanntmachung des Hinweises auf die Patenterteilung: **25.03.2026**
(21) Anmeldenummer: 23838169.3
(22) Anmeldetag: 29.12.2023
(51) Int. Cl.: G01M 3/28, G01M 3/32

(54) **VERFAHREN ZUR DRUCKPRÜFUNG VON BELIEBIGEN PRÜFLINGEN**
METHOD FOR TESTING THE PRESSURE OF ANY TEST OBJECTS
PROCÉDÉ DE TEST DE LA PRESSION DE TOUT OBJET À TESTER

(30) Priorität: 30.12.2022 DE 102022135035; 24.03.2023 DE 102023107494
(43) Veröffentlichungstag der Anmeldung: 18.09.2024
(73) Patentinhaber: Poppe + Potthoff Maschinenbau Gmbh, 99734 Nordhausen (DE)
(72) Erfinder: BAUDLER, Frank, 99755 Ellrich (DE); MONTAG, Johannes, 37359 Küllstedt (DE); STUDE, Kai, 99976 Rodeberg (DE)
(74) Vertreter: Meissner Bolte Partnerschaft mbB
(86) Internationale Anmeldenummer: PCT/EP2023/088004
(87) Internationale Veröffentlichungsnummer: WO 2024/141651

(56) Entgegenhaltungen:
- DE-B4- 102017 113 756
- US-A- 5 600 996

## Beschreibung

Die Erfindung betrifft ein Verfahren zur Druckprüfung von beliebigen Prüflingen, auch solche mit elastischen Eigenschaften, wie Schläuchen oder dergleichen Komponenten, deren Volumen mit einer Prüfflüssigkeit gefüllt wird, wobei der Prüfling mit einem Druckbehälter in Verbindung steht.

Es ist bekannt, fluidführende Bauteile, wie beispielsweise Rohre oder Behälter, im Fertigungsprozess einer Druckprüfung zu unterziehen und hierdurch eine Qualitätskontrolle zu bewerkstelligen.

Dabei werden die Prüflinge häufig auf Dichtheit geprüft oder es gilt, einen definierten Berstdruck zu ermitteln. Bei speziellen Prüfungen ist das Durchlaufen von Druckkurven gefordert. Druckkurven können Haltezeiten auf einem bestimmten Druckniveau oder ein definiertes Entlasten des Prüflinges aufweisen. Insofern wird der entsprechende Prüfling mit einem Druckmedium gefüllt. Eine Pumpeinrichtung oder ein Druckübersetzer erzeugen den notwendigen Prüfdruck.

Die DE 100 66 425 B4 offenbart ein Druckregelventil zur Steuerung eines Gasdruckes in Abhängigkeit von einem Flüssigkeitsdruck, wobei das Gehäuse in eine Gas- und eine Flüssigkeitskammer mittels Membran getrennt ist. Der Druck der Flüssigkeit überträgt sich mittels Membran auf den Gasdruck.

Aus der CN 203705270 U ist ein Verfahren zur Druckprüfung von Prüflingen vorbekannt, die sich in einer Klimakammer befinden. Konkret wird mit der dort bekannten Prüfeinrichtung auf eine Druckprüfung für Wärmetauscher, insbesondere Flüssigkeitskühler für Automobile abgestellt. Druckluft wird dort über ein Proportionalventil einem Tank zugeführt, der bereits über eine Pumpe und ein Ventil mit einer Flüssigkeit aus einem weiteren Tank gefüllt ist. Der Druck im Tank wird mit einem Drucksensor überwacht. Ein Druckventil wirkt im Sinne eines Überdruckventils zum Ablassen im Falle eines unzulässigen Druckanstieges.

Ein Füllstandssensor überwacht den Stand der Prüfflüssigkeit. Über ein weiteres Ventil können verschiedene der zu testenden Wärmetauscher oder Kühler als Proben mit unter Druck stehender Flüssigkeit beaufschlagt werden.

Die DE 43 16 560 C2 zeigt ein Verfahren zur Druckregelung zum Zweck der Druckprüfung bei Kunststoffrohren. Dort kommt eine spezielle Steuerschaltung für Magnetventile nebst Ansteuerverfahren zum Einsatz. Zur Prüfung von Druckrohren aus thermoplastischen Kunststoffen auf ihre Lebenserwartung erfolgt eine Druckprüfung, die auch bei erhöhten Temperaturen vorgenommen wird, um eine künstliche Alterung zu bewirken.

Aus der EP 0 015 874 A1 ist ein Verfahren zur Leckratenbestimmung vorbekannt. Gemäß dem vorgeschlagenen Verfahren wird die zu prüfende flüssigkeitsgefüllte Leitung an einem Ende geschlossen und am anderen Ende über einen thermischen Strömungsmesser an eine Druckquelle angeschlossen. Die Druckquelle erzeugt rechteckförmige Druckimpulse. Die vom Strömungsmesser erfassten Strömungen in der Leitung werden zur Bestimmung der Leckrate ausgewertet.

Bei dem Verfahren zur Dichtigkeitsprüfung galvanischer Elemente nach EP 1 437 585 A2 wird das zu untersuchende galvanische Element in einem geschlossenen Behälter einem Überdruck und anschließend einem Unterdruck ausgesetzt. Auftretende Dickenänderungen des Gehäuses des galvanischen Elementes werden messtechnisch ermittelt.

Aus der WO 2008/028682 A1 ist eine Vorrichtung zum Befüllen und zum Druckprüfen von Flüssigkeitssystemen, insbesondere von Kühlflüssigkeitssystemen an Kraftfahrzeugen vorbekannt. Ein vorgesehener Behälter weist einen Druckluftanschluss und eine am Behälter angeschlossene Pumpe auf. Der Behälter kann mit frischer Kühlflüssigkeit befüllt werden. Über eine Steuereinrichtung besteht die Möglichkeit, den Kühlflüssigkeitskreislauf eines Kraftfahrzeuges durch die Pumpe zu evakuieren, wodurch eine Druckprüfung möglich wird, indem ein bei einer Leckage abfallender Unterdruck erfasst wird. Mittels Umschalthebel kann nach positivem Abschluss der Druckprüfung das Kühlflüssigkeitssystem des Fahrzeuges wieder befüllt werden.

Aus der DE 10 2017 113 756 B4 ist ein Verfahren zur Druckprüfung von beliebigen Prüflingen bekannt, deren Volumen mit einer Flüssigkeit gefüllt wird, wobei der Prüfling mit einem Druckbehälter in Verbindung steht.

Der Druckbehälter ist über ein steuerbares Ventil an einen Druckgasbehälter angeschlossen, welcher oberhalb der Flüssigkeitssäule im Druckbehälter diese Flüssigkeitssäule mit Druckgas beaufschlagt, derart, dass sich der Prüfdruck im Prüfling nach vorgegebener Prüfkurve verändert, wobei der Prüfdruck mittels eines Drucksensors am Prüfling überwacht wird.

Zum pulsationsfreien Durchlaufen von Prüfkurven ist ein Proportionalregelventil mit internem Drucksensor zwischen dem als Speicher wirkenden Druckgasbehälter und dem Druckbehälter geschalten, wobei das Druckgas membranfrei unmittelbar mit der Flüssigkeitsoberfläche im Druckbehälter in Kontakt gelangt. Das eingesetzte Druckgas ist bezogen auf die Flüssigkeit unlöslich oder mit dieser nicht mischbar.

Nach Befüllung des Druckbehälters und des Prüflings mit Flüssigkeit gibt eine Regel- und Steuereinrichtung einen Drucksollwert und eine Druckanstiegsgeschwindigkeit vor. Diese Werte werden an das Proportionalregelventil weitergeleitet, derart, dass der Druck im Druckbehälter und im Prüfkreis vorgabegemäß erhöht oder abgesenkt wird, wobei mit Erreichen des Zieldruckes, bestimmt durch einen Drucksensor am Prüfling, der aktuelle Druckwert eingefroren wird. Das Proportionalregelventil regelt dann auf diesem Sollwert, so dass eine Dehnung oder ein Schrumpfen des Prüflinges ausgeglichen werden kann.

Mit dem Verfahren nach DE 10 2017 113 756 B4 gelingt es, einen abgeschlossenen Prüfling für eine hydraulische Prüfung mit Druck unterschiedlicher Druckverhältnisse und Druckverläufen auszusetzen. Der Druckanstieg erfolgt ohne Druckpulsation und es besteht die Möglichkeit, auftretende Dehnungen des Prüflinges auszugleichen und trotz Dehnung die geforderten Druckwerte einzuhalten.

Für bestimmte, zu prüfende Komponenten ist es jedoch notwendig, nicht nur eine Überdruckprüfung mit verschiedenen Druckwerten durchzuführen, sondern darüber hinaus eine Prüfung mit Druckwechseln von Überdruck in Unterdruck zu verziehen. Diese Druckwechsel müssen zyklisch über einen bestimmten Prüfverlauf erfolgen. Dies gegebenenfalls auch bei unterschiedlichen Temperaturen der Umgebung und mit hoher Wiederholgenauigkeit in engen Toleranzfeldern.

Aus dem Vorgenannten besteht daher die Aufgabe der Erfindung, ein weiterentwickeltes Verfahren zur Druckprüfung von beliebigen Prüflingen, auch solchen mit elastischen Eigenschaften, wie Schläuchen oder dergleichen Komponenten, anzugeben, wobei die Druckprüfung zyklische Druckwechsel von Überdruck in Unterdruck und umgekehrt umfasst, wobei weiterhin die Druckwechsel auf eine Flüssigkeit zu geben sind, um so den notwendigen Druckwechsel im Inneren der Prüflinge erzeugen zu können.

Die Lösung der Aufgabe der Erfindung erfolgt mit einem Verfahren gemäß der Lehre nach Anspruch 1 sowie der erfindungsgemäßen Verwendung oder Anwendung des Verfahrens nach Anspruch 7. Die Unteransprüche stellen mindestens zweckmäßige Ausgestaltungen und Weiterbildungen des Verfahrens dar.

Das Verfahren zur Druckprüfung von beliebigen Prüflingen, auch solchen mit elastischen Eigenschaften, wie Schläuchen oder dergleichen Komponenten, deren Volumen mit einer Prüfflüssigkeit gefüllt wird, geht davon aus, dass der entsprechende Prüfling mit einem Druckbehälter in Verbindung steht.

Weiterhin ist der Druckbehälter über ein erstes, steuerbares Ventil mit einem Druckspeicher in Verbindung stehend. Der Druckspeicher beaufschlagt oberhalb einer Flüssigkeitssäule im Druckbehälter diese Flüssigkeitssäule mit Druckgas, wobei das Druckgas membranfrei mit der Flüssigkeitsoberfläche im Druckbehälter in Kontakt gelangt.

Erfindungsgemäß wird zur Erzeugung von Druckwechseln von Überdruck in Unterdruck und umgekehrt im Inneren des Prüflings, der Druckbehälter über ein zweites, steuerbares Ventil mit einem Vakuumspeicher in Verbindung gebracht. Ein drittes, steuerbares Ventil trennt oder verbindet den Druckbehälter gegenüber der Umgebung.

Für die Druckwechsel werden abwechselnd die Vorladungen in dem Druckspeicher einerseits und dem Vakuumspeicher andererseits auf die Flüssigkeitssäule im Druckbehälter aufgeschalten, wodurch eine Überlagerung des Druckzustandes auf den Prüfling erfolgt.

In Weiterbildung der Erfindung steht der Druckbehälter mit einem Füllstandssensor in Verbindung oder weist einen solchen auf, wobei über eine Veränderung des Füllstandes im Druckbehälter die Druckwechselfrequenz zur Einwirkung auf den Prüfling einstellbar ist.

Zur Unterdruckvorladung steht der Vakuumspeicher mit einer Vakuumpumpe über ein Vakuumventil in Verbindung, wobei im Druckwechselbetrieb der Vakuumspeicher mittels einer Steuereinheit auf einen Sollwert evakuiert wird.

Zur Überdruckvorladung ist der Druckspeicher über ein Druckluftventil mit einer Druckluftquelle verbunden, wobei im Druckwechselbetrieb der Druckspeicher mittels der Steuereinheit auf einen Sollwert gefüllt wird.

Durch Öffnung des dritten, steuerbaren Ventils kann ein druckloser Zustand des Druckbehälters gegenüber der Atmosphäre eingestellt werden.

In Weiterbildung der Erfindung ist der Prüfling in eine Prüfkammer einsetzbar derart, dass in der Prüfkammer Umweltzustände simulierbar sind und/oder der Prüfling einer elektrischen Spannungsbeaufschlagung unterliegt.

Damit kann der Prüfling unter realen Bedingungen den zur Testung notwendigen Druckwechselschritten unterzogen werden.

Erfindungsgemäß ist weiterhin die Anwendung des vorgestellten Verfahrens zur Druckwechselprüfung im Sinne zur Simulation von Belastungen von in Kühlsystemen eingesetzten Komponenten im Hinblick auf Schwankungen des Kühlmitteldruckes, von Nachheizphasen und/oder bei Unterdruckbefüllung, insbesondere von Komponenten für Hybrid- oder Elektrofahrzeuge.

Die Erfindung soll nachstehend anhand eines Ausführungsbeispieles im Hinblick auf eine beispielhafte Vorrichtung zur Durchführung des Verfahrens unter Zuhilfenahme einer Figur näher erläutert werden.

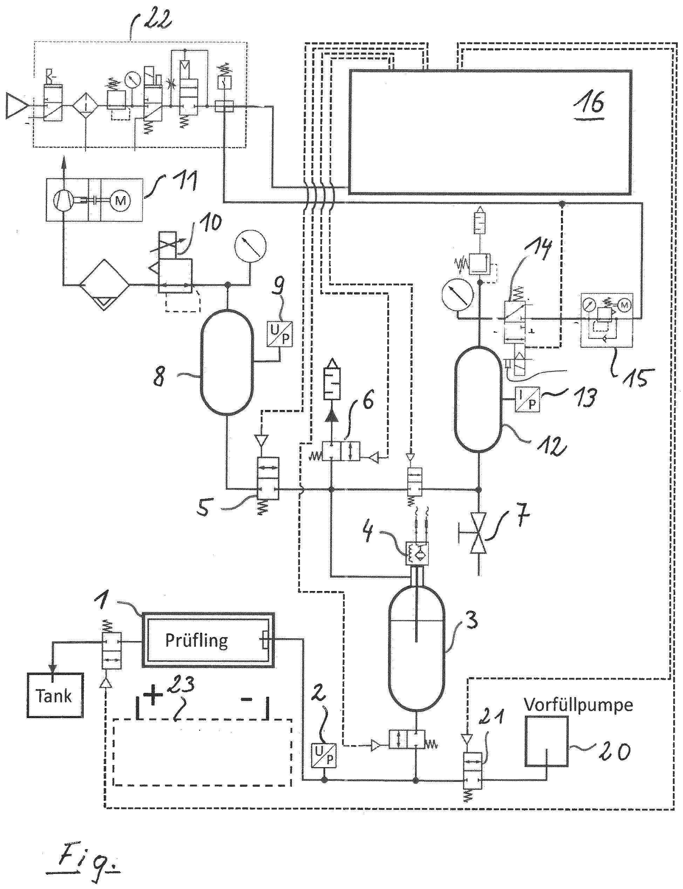

Die Figur zeigt hierbei ein hydraulisches Funktionsschema der beispielhaften Vorrichtung für ein Verfahren zur Druckprüfung von beliebigen Prüflingen, insbesondere zur hier relevanten zyklischen Druckwechselprüfung von Überdruck in Unterdruck auf Flüssigkeiten.

Bei der nachstehenden Erläuterung werden die funktionsmaßgeblichen Komponenten mit separaten Bezugszeichen versehen. Im Übrigen wird für die weiteren Elemente auf die dem Fachmann verständlichen hydraulischen Schematas verwiesen.

Der Prüfling 1 kann zum Beispiel ein typischer Kühlwasserschlauch oder eine andere, zu prüfende Komponente, zum Beispiel für Kühlsysteme, sein.

Dieser Prüfling 1 ist über eine druckfeste Leitung am Druckbehälter 3 angeschlossen. Die vorerwähnte Leitung ist druckseitig mit einem Druckaufnehmer 2 in Verbindung stehend.

Der Druckbehälter 3 verfügt über einen Füllstands- oder Niveausensor 4, um den Füllstand bedarfsgerecht einstellen zu können. Mittels Einstellung des Füllstandes lassen sich die Druckwechselfrequenz und die Genauigkeit hinsichtlich der Druckwechsel vorgeben.

Weiterhin steht der Druckbehälter 3 über einen Verteiler mit einem ersten Ventil V1(7), einem zweiten Ventil V2(5) und einem dritten Ventil V3(6) in Verbindung.

Die Ventile 5, 6, 7 bzw. V1, V2 und V3 dienen der Verbindung mit den Über- bzw. Unterdruckvorladungen und der Atmosphäre.

Die Unterdruckvorladung umfasst einen Vakuumspeicher 8, einen Absolutwertdruckaufnehmer 9, ein einstellbares Drosselventil 10 und eine Vakuumpumpe 11.

Betriebsseitig wird der Vakuumspeicher 8 auf einen definierten Druckwert evakuiert. Diesbezüglich wird die Vakuumpumpe 11 aktiviert, bis im Vakuumspeicher 8 ein bestimmter Sollwert erreicht ist. Das Ventil 10 unterbricht dann den geschilderten Vorgang.

Die Überdruckvorladung geht aus von einem Druckspeicher 12, einem Absolutwertdruckaufnehmer 13, der mit dem Druckspeicher 12 in Verbindung steht, und einem, mit einer Druckluftquelle verbundenen Magnetventil 14.

Betriebsseitig wird der Druckspeicher 12 immer auf einen definierten Solldruckwert beladen. Ist der Sollwert erreicht, schaltet das Magnetventil 14 den weiteren Füllprozess ab. Alternativ kann der erörterte Vorgang mit einem proportional geregelten Druckventil 15 erfolgen.

Zur Erzeugung der Druckwechselvorgänge auf den Prüfling 1 werden nun abwechselnd die Vorladungen in den Über- und Unterdruckspeichern 8; 12 auf die Flüssigkeitssäule im Druckbehälter 3 aufgeschalten.

Entsprechend den Prüferfordernissen besteht die Möglichkeit, über das Ventil V3(6) einen drucklosen Zustand gegenüber der Atmosphäre zu erzeugen.

Über die Einstellung und Anpassung der Druckverhältnisse in den Vorladungen kann der tatsächliche Prüfdruck, der auf den Prüfling einwirkt, eingestellt und angepasst werden.

Eine Steuereinheit 16 übernimmt die Aktivierung der Ventile und realisiert den Prüfablauf nach einem vorgebbaren Programm. Die Werte der Druckaufnehmer 9 und 13 dienen der Sollwerteinstellung und gelangen ebenfalls auf die Steuereinheit 16. Die Druckwechselfolge wird mittels Ansteuerung der Ventile V1 und V2 bzw. 5 und 7 mit Hilfe der Steuereinheit realisiert.

Das vorgestellte Verfahren ist für unterschiedliche Prüfmedien geeignet. Bei Raumtemperatur kann Wasser als Prüfmedium eingesetzt werden. Bei der Prüfung unter speziellen Umweltsimulationen erfolgt bei Tiefsttemperaturen der Einsatz eines entsprechend beständigen Kühlmittels, beispielsweise eines Wasser-Glykol-Gemisches oder eines Prüföles.

Maßgeblich für die Erfindung ist die Schaffung eines Über- und Unterdruck-Regelmoduls, welches zyklische Druckwechsel auf mit Flüssigkeit gefüllte Prüflinge aufbringen kann. Durch den zwischengeschalteten Druckbehälter ist eine Überlagerung des Druckzustandes auf den Prüfling in einfacher Weise möglich.

Eine Vorfüllpumpe 20 mit Ventil 21 dient der Füllung der Verbindungsleitungen, des Prüflings 1 und des Druckwechselspeichers 3 mit dem Prüfmedium.

Die Einheit 22 dient der Druckluftbereitstellung. Eine zusätzliche Bestromung des Prüflings 1 kann mittels einer Spannungsversorgung 23 erfolgen.

Die Vorladungen werden über die Ventile 10 und 15 vorgenommen.

Das Ventil 10 ist bevorzugt ein elektrisch gesteuertes Duckregelventil. Falls der Zieldruck im Prüfling 1 nicht erreicht wird, erfolgt eine Reaktion der Regelung. Daraufhin wird dem Regelventil 10 ein Signal zum Erhöhen des Ausgangsdruckes zugeführt. Infolgedessen wird die Vorladung im Speicher erhöht. Ebenso erhöht sich der Prüfdruck nach Aufschaltung auf den Druckwechselspeicher 3.

Das Ventil 15 ist bevorzugt ein einstellbares Drosselventil. Über die Vakuumpumpe 11 wird der Vakuumspeicher 8 kontinuierlich evakuiert. Nach dem Druckwechsel muss der Vakuumspeicher 8 erneut auf Zieldruck evakuiert werden. Bei geöffnetem Drosselventil geht dies sehr schnell und es wird womöglich der Zieldruck unterschritten. Über eine Amplitudenkorrektur erfolgt hier eine Anpassung und es wird das Drosselventil solange betätigt, bis der Zieldruck erreicht wurde.

Die Amplitudenkorrektur überwacht hier die Abweichung zwischen Solldruck und Istdruck am Prüfling 1. Übersteigt die Abweichung eine definierte Toleranz, justiert die Regelung die Ventile 10 und 15 entsprechend nach. Die Steuerung zur Amplitudenkorrektur erfolgt softwareunterstützt.

## Patentansprüche

1. Verfahren zur Druckprüfung von beliebigen Prüflingen (1), insbesondere solchen mit elastischen Eigenschaften, wie Schläuchen oder dergleichen Komponenten, deren Volumen mit einer Prüfflüssigkeit gefüllt wird, wobei der Prüfling (1) mit einem Druckbehälter (3) in Verbindung steht, weiterhin der Druckbehälter (3) über ein erstes steuerbares Ventil (V1; 7) mit einem Druckspeicher (12) in Verbindung steht, welcher oberhalb einer Flüssigkeitssäule im Druckbehälter (3) diese Flüssigkeitssäule mit Druckgas beaufschlagt, wobei das Druckgas membranfrei mit der Flüssigkeitsoberfläche im Druckbehälter (3) in Kontakt gelangt, wobei weiterhin zur Erzeugung von Druckwechseln von Überdruck in Unterdruck und umgekehrt im Inneren des Prüflings (1), der Druckbehälter (3) über ein zweites, steuerbares Ventil (V2; 5) mit einem Vakuumspeicher (8) in Verbindung steht, sowie ein drittes, steuerbares Ventil (V3; 6) den Druckbehälter (3) gegen die Umgebung trennt oder verbindet, derart, dass für die Druckwechsel abwechselnd die Vorladungen in dem Druckspeicher (12) einerseits und dem Vakuumspeicher (8) andererseits auf die Flüssigkeitssäule im Druckbehälter (3) aufgeschalten werden und eine Überlagerung des Druckzustandes auf den Prüfling (1) erfolgt.

2. Verfahren nach Anspruch 1,
**dadurch gekennzeichnet, dass**
der Druckbehälter (3) einen Füllstandssensor (4) aufweist, wobei über eine Veränderung des Füllstandes im Druckbehälter (3) die Druckwechselfrequenz zur Einwirkung auf den Prüfling (1) einstellbar ist.

3. Verfahren nach Anspruch 1 oder 2,
**dadurch gekennzeichnet, dass**
zur Unterdruckvorladung der Vakuumspeicher (8) mit einer Vakuumpumpe (11) über ein Vakuumventil (10) in Verbindung steht, wobei im Druckwechselbetrieb der Vakuumspeicher (8) mittels einer Steuereinheit (16) auf einen Sollwert evakuiert wird.

4. Verfahren nach einem der vorangegangenen Ansprüche,
**dadurch gekennzeichnet, dass**
zur Überdruckvorladung der Druckspeicher (12) über ein Druckluftventil (14; 15) mit einer Druckluftquelle verbunden ist, wobei im Druckwechselbetrieb der Druckspeicher (12) mittels der Steuereinheit (16) auf einen Sollwert gefüllt wird.

5. Verfahren nach einem der vorangegangenen Ansprüche,
**dadurch gekennzeichnet, dass**
durch Öffnung des dritten, steuerbaren Ventils (V3; 6) ein druckloser Zustand des Druckbehälters (3) gegenüber der Atmosphäre einstellbar ist.

6. Verfahren nach einem der vorangegangenen Ansprüche,
**dadurch gekennzeichnet, dass**
der Prüfling (1) in eine Prüfkammer einsetzbar ist, derart, dass in der Prüfkammer Umweltzustände simulierbar sind und/oder der Prüfling einer elektrischen Spannungsbeaufschlagung unterliegt.

7. Anwendung eines Verfahrens zur Druckwechselprüfung gemäß mindestens einem der vorangegangenen Ansprüche zur Simulation von Belastungen von in Kühlsystemen eingesetzten Komponenten im Hinblick auf Schwankungen des Kühlmitteldrucks, von Nachheizphasen und/oder einer Unterdruckbefüllung, insbesondere von Komponenten für Hybrid- oder Elektrofahrzeuge.

## Claims

1. A method for pressure testing of any test pieces (1), in particular those with elastic properties, such as hoses or similar components, the volume of which is being filled with a test liquid, the test piece (1) being connected with a pressure container (3), the pressure container (3) furthermore being connected, via a first controllable valve (V1; 7), to a pressure accumulator (12) which, above a liquid column in the pressure container (3), applies compressed gas to this liquid column, wherein the compressed gas comes into contact with the liquid surface in the pressure container (3) without a membrane, wherein the pressure container (3) is furthermore connected to a vacuum accumulator (8) via a second, controllable valve (V2; 5) in order to generate pressure changes from positive pressure to negative pressure and vice versa inside the test piece (1), and a third, controllable valve (V3; 6) separates or connects the pressure container (3) from or with the environment such that the pre-charges in the pressure accumulator (12) on the one hand and the vacuum accumulator (8) on the other hand are alternately imposed on the liquid column in the pressure container (3) for the pressure changes, and the pressure state is transferred on the test piece (1).

2. The method according to claim 1,
**characterised in that**
the pressure container (3) has a level sensor (4), wherein the frequency of pressure changes for acting on the test piece (1) is adjustable by changing the level in the pressure container (3).

3. The method according to claim 1 or 2,
**characterised in that**
the vacuum accumulator (8) is connected to a vacuum pump (11) via a vacuum valve (10) for negative pressure pre-charging, wherein the vacuum accumulator (8) is evacuated to a target value by means of a control unit (16) during the pressure change operation.

4. The method according to any one of the preceding claims,
**characterised in that**
the pressure accumulator (12) is connected to a compressed air source via a compressed air valve (14; 15) for positive pressure pre-charging, wherein the pressure accumulator (12) is filled to a target value by means of the control unit (16) during the pressure change operation.

5. The method according to any one of the preceding claims,
**characterised in that**
a pressureless state of the pressure container (3) with respect to the atmosphere is adjustable by opening the third, controllable valve (V3; 6).

6. The method according to any one of the preceding claims,
**characterised in that**
the test piece (1) is insertable into a test chamber such that environmental conditions are simulatable in the test chamber and/or the test piece is subjected to electric voltage application.

7. An application of a method for pressure change testing according to at least one of the preceding claims for simulation of stresses on components used in cooling systems with regard to fluctuations of coolant pressure, of reheating phases and/or of negative pressure filling, in particular of components for hybrid or electric vehicles.

## Revendications

1. Procédé de test sous pression de tout type d'échantillon (1), y compris ceux présentant des propriétés élastiques, tels que des tuyaux flexibles ou des composants similaires, dont le volume est rempli d'un liquide de test,
dans lequel
l'échantillon (1) est en communication avec un réservoir sous pression (3),
en outre, le réservoir sous pression (3) est en communication, via une première vanne commandable (V1 ; 7), avec un accumulateur de pression (12) qui, au-dessus d'une colonne de liquide dans le réservoir sous pression (3), sollicite cette colonne de liquide par un gaz sous pression,
le gaz sous pression vient en contact, sans membrane, avec la surface du liquide dans le réservoir sous pression (3),
en outre, le réservoir sous pression (3) est en communication, via une deuxième vanne commandable (V2 ; 5), avec un accumulateur à vide (8) afin de générer des alternances de pression pour passer d'une surpression à une dépression, et inversement, à l'intérieur de l'échantillon (1),
et une troisième vanne commandable (V3 ; 6) sépare ou relie le réservoir sous pression (3) à l'environnement, de telle sorte que, pour les alternances de pression, les précharges dans l'accumulateur de pression (12) d'une part et dans l'accumulateur à vide (8) d'autre part sont appliquées alternativement à la colonne de liquide dans le réservoir sous pression (3) et qu'il se produit un transfert de l'état de pression à l'échantillon (1).

2. Procédé selon la revendication 1,
**caractérisé en ce que**
le réservoir sous pression (3) comporte un capteur de niveau de remplissage (4), une modification du niveau de remplissage dans le réservoir sous pression (3) permettant de régler la fréquence d'alternances de pression pour agir sur l'échantillon (1).

3. Procédé selon la revendication 1 ou 2,
**caractérisé en ce que**
pour la précharge en dépression, l'accumulateur à vide (8) est en communication avec une pompe à vide (11) par l'intermédiaire d'une vanne à vide (10), l'accumulateur à vide (8) étant mis sous vide à une valeur de consigne au moyen d'une unité de commande (16), en mode de fonctionnement à pression alternée.

4. Procédé selon l'une des revendications précédentes,
**caractérisé en ce que**
pour la précharge en surpression, l'accumulateur de pression (12) est relié à une source d'air comprimé par l'intermédiaire d'une vanne pneumatique (14 ; 15), l'accumulateur de pression (12) étant rempli à une valeur de consigne au moyen de l'unité de commande (16), en mode de fonctionnement à pression alternée.

5. Procédé selon l'une des revendications précédentes,
**caractérisé en ce que** l'ouverture de la troisième vanne commandable (V3 ; 6) permet de régler un état sans pression du réservoir sous pression (3) par rapport à l'atmosphère.

6. Procédé selon l'une des revendications précédentes,
**caractérisé en ce que**
l'échantillon (1) peut être placé dans une chambre de test, de telle sorte que les conditions environnementales peuvent être simulées dans la chambre de test et/ou que l'échantillon est soumis à une tension électrique.

7. Utilisation d'un procédé de test par alternances de pression selon l'une au moins des revendications précédentes pour simuler les contraintes subies par les composants utilisés dans des systèmes de refroidissement en ce qui concerne les fluctuations de pression du réfrigérant, les phases de réchauffage et/ou le remplissage en dépression, en particulier par les composants destinés aux véhicules hybrides ou électriques.
